# EUROPEAN PATENT APPLICATION

(11) **EP 2 439 824 A2**
(43) Date of publication of application: **11.04.2012**
(21) Application number: 11174270.6
(22) Date of filing: 15.07.2011
(51) Int. Cl.: H02G 3/04, E04F 19/04

(54) **Skirting system for connecting skirting, skirting-board and connection body**

(30) Priority: 16.07.2010 NL 2005096
(71) Applicant: Bohebitat Building Products B.V., 2271 EG Voorburg (NL)
(72) Inventor: Koteris, René Nicolaas Bernardus, 3998 NG Schalkwijk (NL); Sturmans, Mathijs Maria Franciscus, 5361 AZ Grave (NL)
(74) Representative: Land, Addick Adrianus Gosling

(57) **Abstract**

The invention relates to a skirting system for arranging a skirting-board on a wall, comprising a skirting-board and at least one connecting body, wherein the skirting-board comprises a visible surface and a connecting tongue extending at an angle from the visible surface, wherein the connecting body comprises a channel for receiving the connecting tongue of the skirting-board, wherein the connecting tongue and the channel of the connecting body are provided with co-acting connecting means, wherein the connecting means comprise a resilient member for connecting the connecting tongue clampingly in the channel.

## Description

The present invention relates to a skirting system for arranging a skirting-board on a wall. The invention further relates to a skirting-board and a connecting body for use in the skirting system.

Skirting-boards are generally arranged on walls, particularly at the bottom of walls, whether these be for instance system walls or bearing walls. These skirting-boards can on the one hand serve as finishing of the wall, and can on the other cover a cable duct under a wall. It is therefore important, particularly in the latter case, that the skirting-board can be easily removed in order to keep the cable duct accessible.

It is also important that the skirting-board connects properly to the wall. The wall thickness in system wall construction can vary, whereby there is a need for a skirting system which can enable a skirting-board to be arranged at substantially random distance from the wall.

DE2129574A1 and US 1,942,137A and GB2249798A for instance show systems in which a skirting-board or a similar strip can be arranged at a predetermined distance from a wall. In DE2129574A1 and GB2249798A use is made for this purpose of a snap coupling, while in US 1,942,137A the skirting-board is fastened by a clamping force. A lip of the skirting-board provided with a gripping element is arranged here in a groove provided with a contracted mouth portion. When the lip is inserted the walls of the groove, and particularly the contracted mouth of the groove, are moved apart by means of the gripping element in order to obtain a clamping force. This clamping makes a spacing adjustment of the skirting-board relative to the wall impossible. Different systems are known for adjustable arrangement of the skirting-board in the direction of arrangement, i.e. in a direction transversely of a visible surface of the skirting-board. Such systems do not however usually allow continuous adjustment.

It is therefore an object of the present invention to provide an efficient, simple and/or robust skirting system for arranging a skirting-board in continuously adjustable manner on a wall.

A skirting system according to claim 1 is provided according to the invention for this purpose.

A skirting system is more particularly provided according to the invention for arranging a skirting-board on a wall, comprising a skirting-board and at least one connecting body, wherein the skirting-board comprises a visible surface and a connecting tongue extending at an angle from the visible surface, wherein the connecting body comprises a channel for receiving the connecting tongue of the skirting-board, wherein the connecting tongue and the channel of the connecting body are provided with co-acting connecting means, wherein the connecting means comprise a resilient member for connecting the connecting tongue in the channel by clamping or by friction.

A connecting body is for instance arranged under a wall, wherein the skirting-board can be arranged in the channel of the connecting body in a connecting direction transversely of the visible surface of this skirting-board. The connecting tongue arranged on the visible surface of the skirting-board is here placed in the channel of the connecting body. Provided for mutual connection of the skirting-board and the connecting body is a resilient member which clampingly connects the channel and the connecting tongue. A connection which is preferably only frictional is hereby provided between the connecting body and the connecting tongue. This makes it possible to move the connecting tongue, and thereby the skirting-board, relative to the channel of the connecting body. This enables a continuous adjustment of the distance between the skirting-board and the connecting body in the connecting direction. Not only can the skirting-board be moved in the direction of movement, an adjustment is also possible in the plane parallel to the visible surface. It is possible for the connecting body to comprise a plurality of channels, wherein the skirting-board is provided with a corresponding number of connecting tongues.

The resilient member has elastic properties, i.e. it continuously exerts a permanent elastic force in order to permanently connect the connecting tongue and the channel.

According to a preferred embodiment of the skirting system of the invention, the connecting means comprise a stop surface which in the connected state extends in a plane lying at least substantially transversely of the visible surface of the skirting-board, wherein the resilient member is adapted to exert a clamping force on the stop surface in the connected state. The stop surface is located in a plane extending transversely of the visible surface, i.e. the connecting direction runs in the plane of the stop surface. It is also important that the stop surface extends over a predetermined distance in the connecting direction in order to enable a continuous adjustment over this predetermined distance.

The resilient member and the stop surface are adapted here such that the resilient member can engage on the stop surface at different distances in the connecting direction. The stop surface preferably has a flat surface here. The clamping force of the resilient member has a component here transversely of the stop surface, i.e. transversely of the connecting direction.

The resilient member is preferably biased in the direction opposite to the normal of the stop surface in the connected state. If the connecting tongue and the channel were to be removed from each other, the resilient member would then move in the direction of the stop surface. During arrangement the resilient member is thus pressed in the direction opposite to the normal of a stop surface so that a resilient force is exerted on this stop surface.

The plane in which the stop surface extends preferably extends at least substantially horizontally. The clamping force of the resilient member is then exerted in an upward or downward direction, as seen in the connected state.

According to a further preferred embodiment, the connecting body comprises the stop surface and the connecting tongue comprises the resilient member. The stop surface is preferably formed by one of the surfaces of the legs of a U-shaped channel of the connecting body which is directed toward the other leg of the U-shaped cross-section. The channel extends in the connecting direction, wherein one of the inner surfaces of the channel forms a stop surface for receiving the resilient member at different distances as seen in the connecting direction.

It must be noted that the term stop surface is understood in a broad sense. It may for instance be possible for the stop surface to be formed by an edge of a plate-like element. The channel can then be formed for instance by a recess in this plate-like element. Although such an edge can have a limited thickness, it is still possible in this respect to speak of a stop surface. It is even possible for the plate-like element to be provided with a channel extending at an angle relative to the visible surface. The stop surface of the plate-like element will then however extend in the plane transversely, or perpendicularly, of the visible surface.

Nor does the stop surface have to be a continuous surface. It may thus be possible that two edges, for instance of plate-like elements as discussed above, together form a stop surface. It is important for the stop surface that the resilient member can engage at different distances as seen in the connecting direction.

According to a further preferred embodiment, the connecting tongue is manufactured from a resilient material for the purpose of forming the resilient member. The connecting tongue itself can for instance serve as resilient member. The tongue is preferably manufactured from resilient plate material, for instance metal. The connecting tongue can for instance be arranged here on the visible surface at an angle other than 90 degrees and, when inserted in the channel, engage clampingly on the engaging surface of the channel.

The resilient member preferably extends over the whole length of the skirting-board. This provides for a strong connection. It is however also possible to provide a plurality of resilient members distributed over the length of the skirting-board.

According to a preferred embodiment however, the connecting tongue extends at least substantially transversely of the visible surface and at the outer end remote from the visible surface the connecting tongue is bent at an angle in order to form the resilient member. The bent portion of the connecting tongue forms the resilient member here. The bent portion extends here such that in the arranged state the bent part engages on the stop surface. The resilient member preferably extends here in the direction of the visible surface. The connecting tongue is as it were bent back here in the direction of the visible surface. This has the result that the portion of the connecting tongue furthest away from the visible surface does not comprise an edge of the plate material. This can prevent damage to for instance cables or injury during arrangement.

According to a further preferred embodiment, the channel comprises two stop surfaces, wherein the first stop surface is adapted for clamping engagement of the resilient member and the second stop surface is adapted to receive lying thereagainst a surface of the connecting tongue. In the connected state the non-bent part of the connecting tongue preferably extends lying against the second stop surface, while the first stop surface is engaged clampingly by the resilient member. The second stop surface with the connecting tongue lying thereagainst provides for stability here. The second stop surface and the surface of the connecting tongue here extend lying against each other over a surface.

According to a further preferred embodiment, the skirting system also comprises spacing means for holding the skirting-board a predetermined distance from the support body, wherein the spacing means comprise at least one rotatable spacing tongue for engaging on a spacing surface in rotated state and wherein in non-rotated state the tongue extends in a plane transversely of the visible surface of the skirting-board. The spacing means prevent a skirting-board being pressed too far against the connecting profile. In the non-rotated state the tongue does not make contact with the spacing surface, while, when the tongue is rotated or bent outward, the tongue engages on the spacing surface and thus limits further movement in the connecting direction. The spacing surface has for this purpose a normal with a component in the connecting direction, and the spacing surface preferably extends perpendicularly of the connecting direction. The spacing means preferably comprise at least two tongues for stable spacing.

The spacing means preferably comprise a plurality of spacing tongues, wherein each of the tongues comprises an engaging surface for engaging the spacing surface in the rotated state, wherein at least two of the engaging surfaces of the tongues extend at different distances as seen in the connecting direction of the skirting-board. The engaging surfaces of the tongues eventually engage on the spacing surface, and by providing a plurality of tongues, wherein at least two of the engaging surfaces extend at different distances in the connecting direction, the distance between the skirting-board and the connecting body can be chosen by means of selecting the correct tongue. In the rotated state the engaging surfaces of the tongues have a normal with a component in the connecting direction. In the rotated state the engaging surfaces of the tongues preferably extend transversely of the connecting direction. The spacing means preferably comprise at least two sets of spacing means for stable spacing of the skirting-board.

According to a further preferred embodiment, the spacing tongue is rotatable on an axis transversely of the visible surface. An edge adjacent to the axis serves here as stop surface, whereby the reactive force between the spacing surface and the engaging surface is perpendicular to the rotation direction of the tongue. This prevents unintended rotation of the tongue during connection.

According to a preferred embodiment of the skirting system, the skirting-board is provided with the rotating tongue and the connecting body is provided with the spacing surface. The connecting tongue of the skirting-board can for instance be provided with the spacing tongues, although it is also possible that a second tongue extending transversely relative to the visible surface and comprising the tongues is arranged on the skirting-board. The spacing surface on the connecting body is preferably formed by a surface extending transversely of the connecting direction.

It must be noted that the invention is not limited to a determined type of connecting body. The connecting body can thus comprise a profile extending substantially in the longitudinal direction of the wall, although it is also possible for the connecting body to comprise a plurality of support bodies. The support bodies can for instance take a plate-like form and be placed a distance under the wall, for instance to support a system wall. As already noted, it may also be possible for the connecting bodies to be arranged in for instance a structural rebate under a wall or in a structural element. It will also be apparent that the system according to the invention can likewise be used on an upper side or in a central part of a wall.

According to a preferred embodiment, the connecting body comprises a plate-like body which extends in the longitudinal direction of the wall parallel to the visible surface in the connected state, wherein a part of the plate-like body extends out of the plane of the plate-like body, for instance through folding, roll forming or extrusion, and is provided with a channel for the purpose of forming a stop surface. This system is for instance suitable for arranging in a rebate, i.e. a recess in a wall, after which a skirting-board can be arranged in simple manner. The plate-like connecting body can then be arranged on the rear wall of the rebate.

The invention further relates to a skirting-board and a connecting body for use in the skirting system according to the invention.

The present invention will be further illustrated with reference to the following figures, which show a preferred embodiment of the device according to the invention and are not intended to limit the scope of the invention in any way, and in which:
- Figure 1 shows a schematic perspective view of a skirting system;
- Figure 2 shows a cross-section of the skirting system;
- Figure 3 shows a perspective view of the skirting-board, and;
- Figures 4a and 4b show a variant of the skirting system.

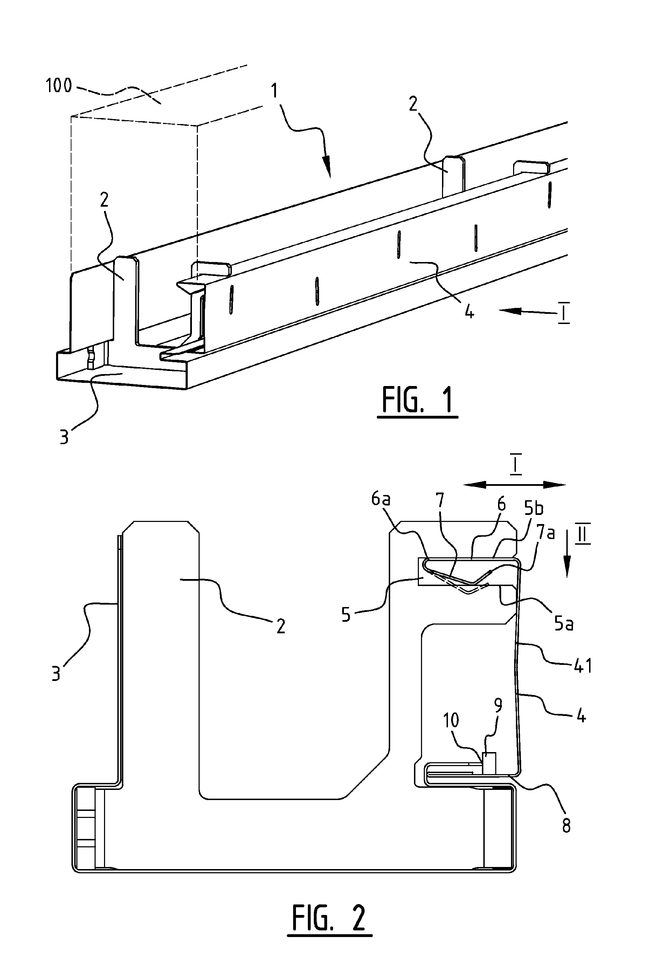

Figure 1 shows a skirting system 1 for arranging a skirting-board 4 on a connecting body in the form of supports 2. Supports 2 are arranged in a profile 3 extending in the longitudinal direction of wall 100. It is noted that wall 100 is only shown schematically. In the system designated with 1 other elements can also be used to support wall 100.

Figure 2 shows skirting-board 4 and supports 2 in more detail. Support 2 is provided with a channel 5 which has a U-shaped cross-section. Channel 5 forms two stop surfaces 5a and 5b. The stop surfaces are formed by surfaces of the legs of U-shaped channel 5 which are directed inward or toward each other.

The skirting-board 4, provided with visible surface 41 to which a decorative wooden skirting can for instance also be attached, can then be clampingly received in channel 5. Skirting-board 4 is provided for this purpose with a connecting tongue 6 extending over the full length of skirting-board 4. Connecting tongue 6 is bent at an outer end 6a to form the resilient member in the form of resilient tongue 7. Resilient tongue 7 is bent again for inward folding of outer end 7a of the connecting tongue.

Skirting-board 4 is manufactured from a resilient plate material, wherein the resilient member in the form of bent part 7 clamps in the connected state onto stop surface 5a. The part 6 of the connecting tongue extending transversely relative to visible surface 41 here lies against second stop surface 5b. This provides for a stable connection. If skirting-board 4 were to be removed from channel 5, resilient tongue 7 would then spring back in a direction II to the position as indicated with broken lines. The resilient member therefore lies under bias in a direction II on stop surface 5a.

Since stop surface 5a extends in a plane perpendicularly of visible surface 41 of the skirting-board, skirting-board 4 can easily be moved in the connecting direction designated with I. Resilient tongue 7 as resilient member will then simply engage at a different location of stop surface 5a. The transverse part 6 will slide correspondingly over second stop surface 5b.

Also shown in Figure 2 are spacing means in the form of a rotatable tongue 9 which engages on a spacing surface in the form of edge 10. Tongue 9 is arranged on skirting-board 4, while edge 10 is formed on profile 3. It will be apparent that it is also possible to arrange edge 10 on support 2.

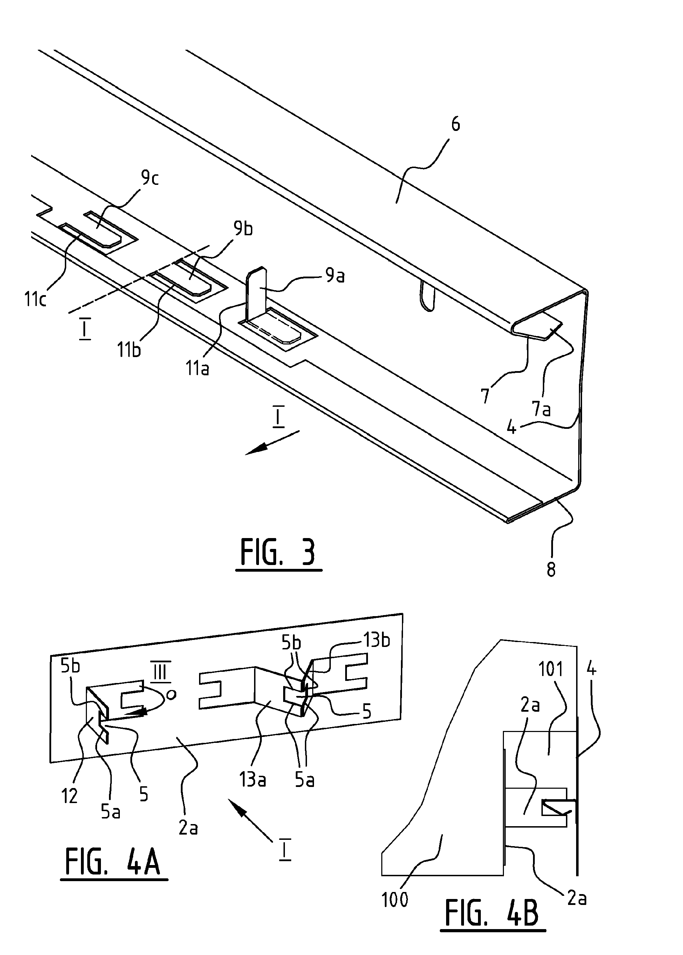

Figure 3 shows the skirting-board in perspective, wherein it can be seen that multiple tongues 9a-c are arranged. The edges indicated by 11a-c here form the engaging surfaces of tongues 9a-c. When the tongue as shown in Figure 3 is arranged on a support 2, engaging surface 11a of tongue 9a will finally arrive against edge 10, and so limit further movement in connecting direction I.

If a different distance is however desired, tongue 9a can be rotated back and tongue 9b can be folded outward. Engaging surface 11b of tongue 9b extends at a different distance as seen in connecting direction I than engaging surface 11a of tongue 9a. Engaging surface 11c of tongue 9c similarly also extends at a different distance. The distance between visible surface 41 and support 2 can be set by selecting one of the three tongues 9a-c. In order to provide a stable arrangement the skirting-board is provided along its length with multiple sets of tongues as shown in figure 3.

Figure 4a shows a system suitable for arranging in for instance a rebate 101 under a wall 100, see figure 4b. The connecting body is a plate 2a, out of which parts 12 and 13 are folded, and for element 12 this is indicated with direction III. In a first embodiment a part 12 is folded outward at an angle of ninety degrees from the plane of plate 2a. Arranged in part 12 is a channel 5 which forms the two stop surfaces 5a and 5b. As shown in figure 4b, a skirting-board 4 can then be arranged in simple manner.

An alternative is shown on the right in figure 4a, wherein two parts 13a and 13b are folded out of the plane and connected at their outer ends. The two channels in parts 13a and 13b then together form channel 5 and stop surfaces 5a and 5b.

The present invention is not limited to the shown embodiments but also extends to other embodiments falling within the scope of the appended claims. The form of the resilient member as shown in figure 3 is thus not limitative, and it would for instance be possible for the resilient member to extend for instance in a curve. The resilient member then forms as it were a semicylinder.

## Claims

1. Skirting system for arranging a skirting-board on a wall, comprising a skirting-board and at least one connecting body, wherein the skirting-board comprises a visible surface and a connecting tongue extending at an angle from the visible surface, wherein the connecting body comprises a channel for receiving the connecting tongue of the skirting-board, wherein the connecting tongue and the channel of the connecting body are provided with co-acting connecting means, wherein the connecting means comprise a resilient member for connecting the connecting tongue in the channel by friction, wherein the connecting means comprise a stop surface which in the connected state extends in a plane lying at least substantially transversely of the visible surface of the skirting-board, wherein the resilient member is adapted to exert a clamping force on the stop surface in the connected state.

2. Skirting system as claimed in claim 1, wherein the resilient member is biased in the direction opposite to the normal of the stop surface in the connected state.

3. Skirting system as claimed in claim 1 or 2, wherein the connecting body comprises the stop surface and wherein the connecting tongue comprises the resilient member.

4. Skirting system as claimed in claim 3, wherein the connecting tongue is manufactured from a resilient material for the purpose of forming the resilient member.

5. Skirting system as claimed in any of the foregoing claims 1 to 4, wherein the connecting tongue extends at least substantially transversely of the visible surface and at the outer end remote from the visible surface is bent at an angle in order to form the resilient member.

6. Skirting system as claimed in claim 5, wherein the resilient member extends in the direction of the visible surface.

7. Skirting system as claimed in any of the foregoing claims 3 to 6, wherein the channel comprises two stop surfaces, wherein the first stop surface is adapted for clamping engagement of the resilient member and the second stop surface is adapted to receive lying thereagainst a surface of the connecting tongue.

8. Skirting system as claimed in any of the foregoing claims 3 to 7, wherein the connecting body comprises a plate-like body which extends in the longitudinal direction of the wall parallel to the visible surface in the connected state, wherein a part of the plate-like body extends out of the plane of the plate-like body and is provided with a channel for the purpose of forming a stop surface.

9. Skirting system as claimed in any of the foregoing claims 1 to 8, also comprising spacing means for holding the skirting-board a predetermined distance from the support body, wherein the spacing means comprise at least one rotatable spacing tongue for engaging on a spacing surface in rotated state and wherein in non-rotated state the tongue extends in a plane transversely of the visible surface of the skirting-board.

10. Skirting system as claimed in claim 9, wherein the spacing means comprise a plurality of spacing tongues, wherein each of the tongues comprises an engaging surface for engaging the spacing surface in the rotated state, wherein at least two of the engaging surfaces of the tongues extend at different distances as seen in the connecting direction of the skirting-board.

11. Skirting system as claimed in claim 9 or 10, wherein the spacing tongue is rotatable on an axis transversely of the visible surface.

12. Skirting system as claimed in claim 9, 10 or 11, wherein the skirting-board is provided with the rotating tongue and the connecting body is provided with the spacing surface.

13. Skirting-board for use in the skirting system as claimed in any of the foregoing claims.

14. Connecting body for use in the skirting system as claimed in any of the foregoing claims.
